**Europäisches Patentamt**

**European Patent Office**

**Office européen des brevets**

(11) Veröffentlichungsnummer: **0 511 613 A1**

## (12) EUROPÄISCHE PATENTANMELDUNG

(21) Anmeldenummer: **92107144.5**

(22) Anmeldetag: **27.04.92**

(51) Int. Cl.5: **F16H 63/30**, F16H 3/089, F16D 21/04

(30) Priorität: **29.04.91 DE 4113938**

(43) Veröffentlichungstag der Anmeldung:
**04.11.92 Patentblatt 92/45**

(84) Benannte Vertragsstaaten:
**AT CH DE ES FR GB IT LI NL**

(71) Anmelder: **STEYR-DAIMLER-PUCH AKTIENGESELLSCHAFT**
**Franz-Josefs-Kai 51**
**A-1010 Wien(AT)**

(72) Erfinder: **Wöntner, Gebhard**
**Wickendorf 13**
**A-4493 Wolfern(AT)**

(54) **Wechselgetriebe mit Klauenkupplung für einen Zapfwellenantrieb.**

(57) In einem Wechselgetriebe mit zwei Wellen, mehreren ständig kämmenden Zahnradpaaren und einer Klauenkupplung, die aus einer Mitnehmernabe (20), einer Schaltmuffe (21) und mehreren Mitnehmerringen (23,25,26,27) besteht, weisen die Mitnehmerklauen (32,33) zu einer Unterbrechung (31) gerichtete Abschrägungen (40,41) und die Schaltklauen (38,39) entsprechend abgeschrägte Flanken (45,47) auf, um die Schaltmuffe (21) bei Übertragung eines Drehmomentes in den jeweiligen Schaltstellungen zu positionieren und zu arretieren. Zur Arretierung in den Endstellungen können auch die Gegenklauen (36,37) der Mitnehmerringe (26,27) abgeschrägte Flanken (50,51) aufweisen.

Fig.3

Die Erfindung betrifft ein Wechselgetriebe, bestehend aus einer ersten Welle mit mindestens zwei Zahrädern, einer zweiten Welle mit mindestens zwei losen Zahnrädern, die jeweils Mitnehmerringe aufweisen, und einer Klauenkupplung, die sich aus einer fest mit der zweiten Welle verbundenen Mitnehmernabe und einer Schaltmuffe zusammensetzt, die erste und zweite Schaltklauen aufweist, so daß sie die Mitnehmernabe wahlweise mit einem der Mitnehmerringe verbindet.

Aus der DE-OS 33 31 242 ist ein gattungsgemäßes viergängiges Wechselgetriebe bekannt, dessen Schaltmuffe über zwei Schaltklauen verfügt, deren Abstand und Breite so bemessen ist, daß die ersten und zweiten Klauen wahlweise in Gegenklauen eines der vier Losräder auf der zweiten Welle eingreifen.

Bei diesem bekannten Getriebe muß die Schaltmuffe vor allem in den Zwischenstellungen sehr genau positioniert werden, was eine besonders genaue Bearbeitung der Muffen, Naben und der Teile des Schaltgestänges erfordert und durch die sich addierenden Toleranzen dieser Teile noch erschwert ist.

Zur Arretierung der Schaltmuffe in einer gewählten Position wird bei einem solchen Wechselgetriebe die die Schaltgabel führende Schaltstange mit Kugelrasten arretiert, damit der gewählte Gang bei Lastwechsel nicht herausspringt. Diese Kugelrasten sind jedoch gerade bei diesem Getriebetyp besonders stark beansprucht und verschleißanfällig, weil durch die Überlagerung der geringen Exzentrizitäten der koaxialen Getriebe- und Kupplungsglieder axiale Kräfte auf die Schaltmuffe wirken können.

Das der Erfindung zugrundeliegende Problem besteht darin, mit konstruktiv einfachen Mitteln ein Wechselgetriebe mit wenigstens zwei Gängen zu schaffen, bei dem sich die Schaltmuffe in wenigstens einer Schaltstellung sicher arretieren läßt.

Diese Aufgabe wird ausgehend von dem gattungsgemäßen Stand der Technik dadurch gelöst, daß die Mitnehmernabe Klauen aufweist, die durch eine Unterbrechung in erste und zweite Mitnehmerklauen unterteilt sind, daß die Flanken der ersten Mitnehmerklauen im Bereich der Unterbrechungen auf diese zulaufend konvergent abgeschrägt sind, und daß die ersten Schaltklauen abgeschrägte Flanken aufweisen, die in einer bestimmten Schaltstellung an den gleichsinnig abgeschrägten Flanken der ersten Mitnehmerklauen anliegen.

Durch die erfindungsgemäße Ausgestaltung der Mitnehmernabe, der Flanken der ersten Mitnehmerklaue und der Flanken der ersten Schaltklaue wird die erste Schaltklaue in einer bestimmten Schaltstellung, in der sie mit ihrer abgeschrägten Flanke an der gleichsinnig abgeschrägten Flanke der ersten Mitnehmerklaue anliegt, sicher arretiert. Durch das Drehmoment werden die aneinanderliegenden abgeschrägten Flanken der Schaltklaue und der Mitnehmerklaue aneinandergedrückt, wodurch eine Axialkraft nach rechts entsteht. Diese Axialkraft drückt die erste Schaltklaue gegen die zweite Mitnehmerklaue. Die Kante der ersten Schaltklaue überragt dabei die Kante der zweiten Mitnehmerklaue. Die erste Schaltklaue ist dadurch in einer Richtung durch die abgeschrägte Flanke der ersten Mitnehmerklaue und in der anderen Richtung durch die zweite Mitnehmerklaue arretiert.

Da die Arretierung indirekt durch das Drehmoment beeinflußt wird, läßt sich der entsprechende Gang bei geringen Drehzahlen leicht lösen. Bei hohen Drehzahlen wird durch das Drehmoment eine sichere Arretierung gewährleistet. Eine zusätzliche Arretierung des Schalthebels ist nicht erforderlich.

Wenn auf beiden Seiten der Mitnehmernabe wenigstens ein loses Zahnrad angeordnet ist, sind die Flanken der zweiten Mitnehmerklauen im Bereich der Unterbrechungen ebenfalls auf diese zulaufend konvergent abgeschrägt, und die zweiten Schaltklauen der Schaltmuffe weisen ebenfalls abgeschrägte Flanken auf, die gegensinnig zu den Flanken der ersten Schaltklauen abgeschrägt sind und die in einer weiteren bestimmten Schaltstellung an den gleichsinnig abgeschrägten Flanken der zweiten Mitnehmerklauen anliegen.

Bei dieser Ausführungsform ist die Schaltmuffe wenigstens in den Stellungen arretiert, in denen eine Schaltklaue der Schaltmuffe in ein an die Mitnehmernabe angrenzendes Zahnrad und die andere Schaltklaue in die entsprechende Mitnehmerklaue eingreift.

Bei Wechselgetrieben, bei denen zusätzlich wenigstens ein inneres Zahnrad auf einer Nabenhülse eines äußeren Zahnrads und das äußere Zahnrad auf der zweiten Welle drehbar gelagert ist und der Mitnehmerring des äußeren Zahnrads an die Mitnehmernabe und der Mitnehmerring des inneren Zahnrads an den Mitnehmerring des äußeren Zahnrads angrenzt, wird eine Arretierung in einer weiteren Schaltstellung dadurch geschaffen, daß Gegenklauen des Mitnehmerrings des inneren Zahnrads gleichsinnig mit den Flanken der zweiten Schaltklauen abgeschrägte Flanken aufweisen und daß die Schaltmuffe bei Verbindung mit den Gegenklauen des Mitnehmerrings des inneren Zahnrads am inneren Zahnrad axial anschlägt.

Durch das Drehmoment wird auch hier eine Axialkraft erzeugt, die die Schaltklaue nach außen drückt. Durch diesen Druck schlägt die Schaltmuffe am inneren Zahnrad axial an. In dieser Schaltstellung wird demnach die Schaltmuffe in einer Richtung durch das innere Zahnrad und in der anderen Richtung durch die abgeschrägte Flanke der Gegenklaue des Mitnehmerrings des inneren Zahnrads arretiert.

Der Winkel der Abschrägungen der jeweiligen Flanken liegt vorteilhafterweise im Bereich zwischen zwei und acht Grad.

Ausführungsbeispiele der Erfindung werden nachstehend anhand von Zeichnungen näher erläutert. Es zeigt:

Fig.1:    einen Längsschnitt durch eine bevorzugte Ausführungsform eines Wechselgetriebes;

Fig.2:    das Detail A der Fig.1, stark vergrößert;

Fig.3:    schematisch eine Draufsicht auf Fig.2;

Fig.4:    das Detail,B aus Fig.3, weiter vergrößert;

Fig.5:    eine zweite Ausführungsform des Wechselgetriebes,

Fig.6:    eine dritte Ausführungsform des Wechselgetriebes in Dreigangausführung,

Fig.7:    eine vierte Ausführungsform des Wechselgetriebes als Zweiganggetriebe.

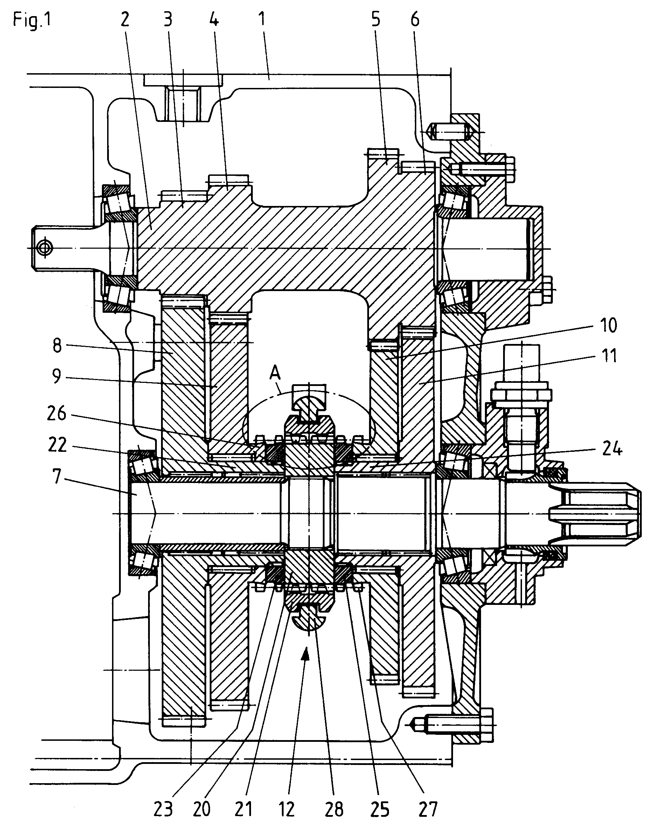

In Fig.1 ist das Gehäuse des Wechselgetriebes mit 1 bezeichnet. In diesem ist eine erste Welle 2 gelagert, die hier als Eingangswelle dient, sie könnte jedoch auch Ausgangswelle sein. Sie trägt Zahnräder 3, 4, 5 und 6, die hier einstückig mit der Welle 2 ausgeführt sind, aber auch auf beliebige andere Weise fest oder kuppelbar mit dieser verbunden sein könnten. Im Gehäuse 1 ist außerdem eine zweite Welle 7 gelagert, auf der Zahnräder 8, 9, 10 und 11 frei drehbar gelagert sind. Schließlich ist auf der zweiten Welle 7 zwischen den inneren Zahnrädern 9 und 10 eine Klauenkupplung 12 angeordnet.

Diese Klauenkupplung 12 besteht aus einer fest mit der Welle 7 verbundenen Mitnehmernabe 20, einer Schaltmuffe 21 und den Mitnehmerringen 23, 25, 26, 27, die beiderseits an die Mitnehmernabe 20 anschließen.

Um dieses Anschließen zu ermöglichen, sind die äußeren Zahnräder 8, 11 mit Nabenhülsen 22 bzw. 24 versehen, mit denen, beiderseits direkt an die Mitnehmernabe 20 anschließend, erste Mitnehmerringe 23, 25 drehfest verbunden sind. Auf den Nabenhülsen 22, 24 sind die losen inneren Zahnräder 9, 10, beispielsweise mittels Nadellagern, frei drehbar. Diese inneren Zahnräder 9, 10 weisen an der der Klauenkupplung 12 zugekehrten Seite zweite Mitnehmerringe 26, 27 auf, die außen an die ersten Mitnehmerringe 23, 25 anschließen.

Die Schaltmuffe 21 wird von einer Schaltgabel 28 umfaßt, die wie üblich und daher nicht dargestellt, mit einer im Gehäuse 1 geführten Schaltstange verbunden ist. Die Schaltmuffe 21 ist in Fig.1 in der Leerlaufstellung eingezeichnet und kann in beiden Richtungen in zwei verschiedenen Stellungen je zwei Gänge herstellen. Dabei werden im folgenden die Gänge ohne Rücksicht auf das Übersetzungsverhältnis von links nach rechts mit eins bis vier bezeichnet.

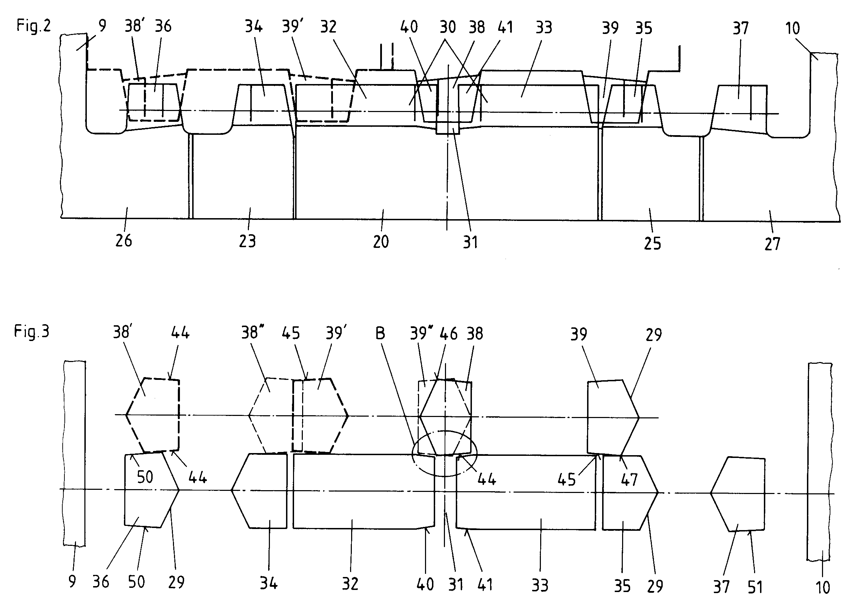

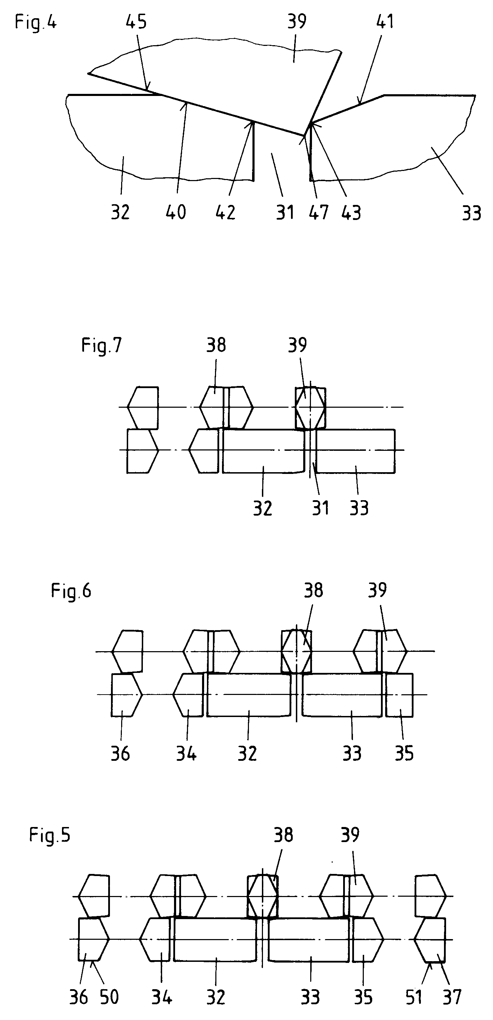

In den Figuren 2 und 3 sind die erfindungswesentlichen Details der Klauenkupplung 12 erkennbar, wobei in Fig.3 nur schematisch je eine Reihe von Schaltklauen und Mitnehmerklauen eingezeichnet ist, und die direkt daran anschließenden weiteren Reihen von Klauen nicht mehr. Die Klauen 30 der Mitnehmernabe 20 weisen eine Unterbrechung 31 auf, sodaß sich miteinander fluchtende erste und zweite Mitnehmerklauen 32 bzw. 33 bilden. Diese weisen, an die Unterbrechung 31 angrenzend und zu dieser hin geneigt, also konvergent zu dieser zulaufende Abschrägungen 40, 41 auf, die Arretierkanten 42, 43 (siehe Fig.4) bilden.

An diese schließen beiderseits erste Mitnehmerringe 23, 25 mit Gegenklauen 34, 35 an, deren Flanken aus einem noch zu erläuterndem Grund nicht abgeschrägt sind. An die ersten Mitnehmerringe 23, 25 schließen dann zweite Mitnehmerringe 26, 27 an, die Teile der inneren Zahnräder 9, 10 und mit Gegenklauen 36, 37 ausgerüstet sind. Diese Gegenklauen 36, 37 verfügen über abgeschrägte Flanken 50, 51.

Die Schaltmuffe 21 ist in der dem dritten Gang entsprechenden Stellung in Vollinie dargestellt. Sie weist erste Schaltklauen 39 und zweite Schaltklauen 38 auf, deren axialer Abstand geeignet bemessen ist. Die Flanken 44, 45 der Schaltklauen 38, 39 sind gegensinnig abgeschrägt. Ferner weisen die Schaltklauen 38, 39 ebenso wie die Gegenklauen 34, 35, 36, 37 Abdachungen 29 auf, um das Verschieben der Schaltmuffe 21 auch dann zu gestatten, wenn die Gegenklauen ungünstig stehen.

Im ersten Getriebegang nehmen die Schaltklauen 38, 39 die dick strichliert eingezeichneten Stellungen 38', 39' ein, in der sie durch das Zusammenwirken der abgeschrägten Flanken 44, 50 bei Übertragung eines Drehmomentes nach links gedrückt werden, wo die Schaltmuffe 21 (siehe Fig.2) am inneren Zahnrad 9 Anschlag findet. Im zweiten Gang befinden sich die Schaltklauen 38, 39 in der dünn strichliert eingezeichneten Stellung 38'', 39'', in der die Arretierung auf ganz besondere Weise erfolgt, die anhand der Fig.4 erläutert werden soll.

In Fig.4 ist zu erkennen, daß in der dem zweiten Gang entsprechenden Zwischenstellung die abgeschrägte Flanke 45 der ersten Schaltklaue 39 an der gleichsinnig abgeschrägten Flanke 40 der ersten Mitnehmerklaue 32 anliegt. Durch das übertragene Drehmoment werden die Flanken 40, 45 aneinander gedrückt, wodurch eine Axialkraft nach rechts entsteht, die die erste Schaltklaue 39 mit ihrer Sperrkante 47 gegen eine Arretierkante 43 der zweiten Mitnehmerklaue 33 drückt. Durch die Breite der Unterbrechung 31 überragt die Sperrkante 47 die Arretierkante 43, so daß die erste Schaltklaue 39 in beiden Richtungen arretiert ist. Deshalb ist eine Abschrägung der Gegenklauen 34 (wieder in Fig.3) nicht mehr erforderlich, ja sie würde die eben beschriebene Arretierwirkung sogar stören. Analog wirkt die andere Arretierkante 42 auf die zweite Schaltklaue 38 als Arretierung für den dritten Gang.

In den Ausführungsformen der Figuren 5 bis 7 werden der Reihe nach Vereinfachungen vorgenommen, bis zur einfachsten Form in Fig.7. Die zweite Ausführungsform von Fig.5 unterscheidet sich von der in Fig.3 gezeigten nur dadurch, daß die Flanken 50, 51 der Gegenklauen 36, 37 nicht abgeschrägt sind. Bei dieser Ausführungsform erfolgt die Arretierung nur im zweiten und dritten Gang, im ersten und vierten Gang erfolgt sie durch konventionelle Mittel.

Die dritte Ausführungsform von Fig.6 unterscheidet sich von der in Fig.5 dadurch, daß ein zweiter Mitnehmerring 27 mit den Klauen 37 weggelassen wurde. So ist ein Dreiganggetriebe entstanden, bei dem der zweite und dritte Gang arretiert sind.

Die vierte Ausführungsform von Fig.7 unterscheidet sich von der in Fig.6 dadurch, daß auch ein erster Mitnehmerring 25 mit den Gegenklauen 35 weggelassen wurde, sodaß nur mehr ein Zweiganggetriebe vorliegt. Da in diesem Fall nur der zweite Gang einer Arretierung bedarf, brauchen die zweiten Mitnehmerklauen 33 zur Unterbrechung 31 hin nicht mehr abgeschrägt sein. Auch für die zweiten Schaltklauen 38 der Schaltmuffe 21 sind keine Abschrägungen mehr erforderlich.

**Patentansprüche**

1. Wechselgetriebe, bestehend aus
   a) einer ersten Welle (1) mit mindestens zwei Zahrädern (3, 4; 5, 6)
   b) einer zweiten Welle (7) mit mindestens zwei losen Zahnrädern (8, 11), die jeweils Mitnehmerringe (23, 25) aufweisen, und
   c) einer Klauenkupplung (12), die sich aus einer fest mit der zweiten Welle (7) verbundenen Mitnehmernabe (20) und einer Schaltmuffe (21) zusammensetzt, die erste und zweite Schaltklauen (38 bzw.39) aufweist, so daß sie die Mitnehmernabe (20) wahlweise mit einem der Mitnehmerringe (23, 25) verbindet,
   dadurch gekennzeichnet, daß
   d) die Mitnehmernabe (20) Klauen (30) aufweist, die durch eine Unterbrechung (31) in erste (32) und zweite (33) Mitnehmerklauen unterteilt sind,
   e) daß die Flanken (40) der ersten Mitnehmerklauen (32) im Bereich der Unterbrechungen (31) auf diese zulaufend konvergent abgeschrägt sind, und
   f) die ersten Schaltklauen (38) abgeschrägte Flanken (45) aufweisen, die in einer bestimmten Schaltstellung an den gleichsinnig abgeschrägten Flanken (40) der ersten Mitnehmerklauen (32) anliegen.

2. Wechselgetriebe nach Anspruch 1 bei dem auf beiden Seiten der Mitnehmernabe (20) wenigstens ein loses Zahnrad (8, 11) angeordnet ist, dadurch gekennzeichnet, daß die Flanken (40) der zweiten Mitnehmerklauen (32) im Bereich der Unterbrechungen (31) auf diese zulaufend konvergent abgeschrägt sind, und die zweiten Schaltklauen (38) der Schaltmuffe (21) abgeschrägte Flanken (44) aufweisen, die gegensinnig zu den Flanken (45) der ersten Schaltklauen (39) abgeschrägt sind und die in einer weiteren bestimmten Schaltstellung an den gleichsinnig abgeschrägten Flanken (40) der zweiten Mitnehmerklauen (32) anliegen.

3. Wechselgetriebe nach Anspruch 1 oder 2, bei dem wenigstens ein inneres Zahnrad (8, 11) auf einer Nabenhülse (22, 24) eines äußeren Zahnrads (8, 11) und das äußere Zahnrad (8, 11) auf der zweiten Welle (7) drehbar gelagert ist, wobei der Mitnehmerring (23, 25) des äußeren Zahnrads (8, 11) an die Mitnehmernabe (20) und der Mitnehmerring (26, 27) des inneren Zahnrads (9, 10) an den Mitnehmerring (23, 25) des äußeren Zahnrads (8, 11) angrenzt, dadurch gekennzeichnet, daß Gegenklauen (36, 37) des Mitnehmerrings (26, 27) des inneren Zahnrads (9, 10) gleichsinnig mit den Flanken (44) der zweiten Schaltklauen (38) abgeschrägte Flanken (50, 51) aufweisen und daß die Schaltmuffe (21) bei Verbindung mit den Gegenklauen (36, 37) des Mitnehmerrings (26, 27) des inneren Zahnrads (8, 11) am inneren Zahnrad (9, 10) axial anschlägt.

4. Wechselgetriebe nach einem der vorhergehenden Ansprüche, dadurch gekennzeichnet, daß der Winkel der Abschrägungen der jeweiligen Flanken (40, 41, 44, 45) im Bereich zwischen zwei und acht Grad liegt.

Fig.1

Fig.2

Fig.3

Fig.4

45    39    41

32    40    42    31    47    43    33

Fig.7    38    39

32    31    33

Fig.6    38    39

36    34    32    33    35

Fig.5    38    39

36  50    34    32    33    35    51  37

Europäisches
Patentamt

**EUROPÄISCHER RECHERCHENBERICHT**

Nummer der Anmeldung

EP 92 10 7144

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | DE-A-3 331 242 (STEYR-DAIMLER-PUCH)<br>* Seite 6, Zeile 7 - Zeile 29; Abbildung 1 *<br>--- | 1 | F16H63/30<br>F16H3/089<br>F16D21/04 |
| A | DE-B-1 140 032 (ZAHNRADFABRIK FRIEDRICHSHAFEN)<br>* das ganze Dokument *<br>--- | 1 | |
| A | US-A-3 249 188 (M.J. MAINA)<br>* das ganze Dokument *<br>--- | 1 | |
| A | EP-A-0 195 706 (AUTOMOBILES PEUGEOT)<br>* Zusammenfassung; Abbildung 2 *<br>----- | 1 | |
|  |  |  | **RECHERCHIERTE SACHGEBIETE (Int. Cl.5 )**<br><br>F16H<br>F16D |

Der vorliegende Recherchenbericht wurde für alle Patentansprüche erstellt

| Recherchenort | Abschlußdatum der Recherche | Prüfer |
|---|---|---|
| DEN HAAG | 20 AUGUST 1992 | MENDE H. |